# EUROPÄISCHE PATENTSCHRIFT

(11) **EP 3 830 433 B1**
(45) Veröffentlichungstag und Bekanntmachung des Hinweises auf die Patenterteilung: **20.05.2026**
(21) Anmeldenummer: 19714575.8
(22) Anmeldetag: 22.03.2019
(51) Int. Cl.: F16B 37/14, H01R 13/52, F16B 33/00, H01R 4/30, H01R 4/64

(54) **EINSATZ ZUR VERBINDUNG EINES ELEKTRISCHEN ANSCHLUSSES MIT EINER WAND SOWIE SCHUTZKAPPE FÜR EINEN EINSATZ**
INSERT FOR CONNECTING AN ELECTRIC CONNECTION TO A WALL, AND PROTECTIVE CAP FOR AN INSERT
INSERT POUR RELIER UNE CONNEXION ÉLECTRIQUE À UN MUR ET CAPUCHON DE PROTECTION POUR UN INSERT

(30) Priorität: 03.08.2018 DE 202018104479 U
(43) Veröffentlichungstag der Anmeldung: 09.06.2021
(73) Patentinhaber: Fairchild Fasteners Europe - Camloc GmbH, 65779 Kelkheim (Taunus) (DE)
(72) Erfinder: DACH, Alexander Sebastian, 99837 Berka/Werra (DE); JÜLING, Dieter, 65779 Kelkheim (DE)
(74) Vertreter: Keil & Schaafhausen Patentanwälte PartGmbB
(86) Internationale Anmeldenummer: PCT/EP2019/057293
(87) Internationale Veröffentlichungsnummer: WO 2020/025177

(56) Entgegenhaltungen:
- EP-A1- 1 376 766
- EP-A1- 2 263 826
- EP-A1- 2 986 509
- EP-A1- 3 293 404
- EP-B1- 1 376 766
- EP-B1- 2 986 509
- DE-A1- 19 640 891
- DE-A1- 3 033 714
- DE-C2- 3 033 714
- DE-U1- 202018 101 358
- US-A- 5 315 745
- US-B1- 7 892 049

## Beschreibung

Die Erfindung betrifft einen Einsatz zur Verbindung eines elektrischen Anschlusses mit einer Wand, beispielsweise einem dünnen Blech, mit einem Bolzen, der einen Schaft aufweist, welcher mit einem Verbindungsmittel versehen ist, und einem elektrisch leitfähigen Ring mit einer Durchgangsöffnung zur Aufnahme des Bolzens, wobei der aufgenommene Bolzen mit seinem Schaft aus einer Kontaktfläche des Rings hervorsteht.

Um die elektrische Leitfähigkeit zwischen einem Kabel und einem Blech herzustellen, ist es bekannt, einen Bolzen (Massebolzen oder Erdungsbolzen) an einem Blech mittels einer deformierbaren Hülse oder Ring zu befestigen. Der Ring weist dabei typischerweise eine Kontaktfläche für die elektrische Verbindung eines Kabels auf, wobei der Bolzen zur Befestigung des Kabels ein Verbindungsmittel, beispielsweise ein Gewinde an einem Schaft besitzt. Dieser Schaft steht dann aus der Kontaktfläche des Rings heraus, sodass bei einer Befestigung des Kabels mit dem Verbindungsmittel, dieses auf die Kontaktfläche gepresst wird. Die Verbindung zwischen Ring und Wand muss Zugkräften sowie einem Drehmoment widerstehen können, welche beispielsweise bei der Befestigung eines Kabelschuhs auf dem Bolzen durch eine Mutter erzeugt werden können. Dieses wird durch eine radiale Aufweitung und erhöhte Flächenpressung im Bereich des Bleches erreicht. Zusätzlich weitet sich die Hülse außerhalb des Bleches auf, so dass eine erhöhte Zugkraft erreicht werden kann. Die Übertragung des Stromes erfolgt an den Wänden der Bohrung im Blech. Die Installation und Verformung der Hülse muss sicherstellen, dass in diesem Bereich der Übergangswiderstand so niedrig wie möglich ist.

Aus der EP 0 880 199 B1 ist hierfür ein Einsatz der oben genannten Art bekannt, der einen Bolzen und einen Ring aufweist. Der Bolzen weist einen Kopf, der sich entlang einer ersten Längsachse erstreckt, sowie einen Schaft auf, welcher mit wenigstens einem Verbindungsmittel versehen ist. Der Ring ist mit einer Durchgangsöffnung zur Aufnahme des Bolzens versehen, die sich entlang einer zweiten Längsachse erstreckt. Der Kopf des Bolzens ist dabei annähernd als ein Kegelstumpf ausgebildet, der die zylindrisch ausgebildete Durchgangsöffnung des Rings aufweitet, wenn der Kopf in den Ring gezogen wird.

Ist ein solcher Einsatz an einer Wand befestigt, steht der Bolzen schutzlos und exponiert aus der Wand hervor. Im Zuge nachfolgender Arbeiten an dieser Wand besteht die Gefahr, dass Beschädigungen an dem Bolzen, beispielsweise an dessen Gewinde auftreten. Insbesondere müssen Wände, wie beispielsweise Blechbauteile, nach dem Einsetzen eines Bolzens lackiert werden. Wird dabei beispielsweise versehentlich Lack auf das Gewinde des Bolzens aufgetragen, so kann der Bolzen später nicht mehr oder nur mit erheblichem Aufwand mit einem Kabel verbunden werden. Wird versehentlich die Kontaktfläche des Rings lackiert, führt dies zu einem erhöhten Übergangswiderstand zwischen Kabel und Wand, da Lacke im allgemeinen Fall elektrisch isolierende Eigenschaften aufweisen. Bei hohen Strömen kann dadurch eine starke Erwärmung des Einsatzes und der Wand auftreten, die zu Beschädigungen an der Wand führen können. Je nach Einsatzgebiet kann dies sogar zu einem erheblichen Brandrisiko führen, welches es zu vermeiden gilt.

Aus der US 7,892,049 ist ein Einsatz mit einem Gewindebolzen und einer Mutter zur Verbindung elektrischer Anschlüsse mit einer Fahrzeugwand bekannt. Die Mutter kann dabei durch eine Schutzkappe ersetzt werden.

Weitere Schutzkappen zum Schutz einer Verbindung zwischen Bolzen und Mutter sind aus der DE 30 33 714 A1 und der US 5,590,992 A bekannt.

Es ist daher eine Aufgabe der vorliegenden Erfindung, einen verbesserten Einsatz bereitzustellen, der einen Schutz bei Arbeiten, insbesondere bei einem Lackieren, bietet.

Diese Aufgabe wird durch einen Einsatz mit den Merkmalen des Anspruchs 1 gelöst. Der erfindungsgemäße Einsatz zur Verbindung eines elektrischen Anschlusses mit einer Wand weist einen Bolzen mit einem Schaft auf, der ein erstes Verbindungsmittel aufweist. Als Verbindungsmittel kann beispielsweise ein Gewinde, ein Bajonettverschluss, ein Kreuzpin oder ein anderes Befestigungselement vorgesehen sein. Der erfindungsgemäße Einsatz weist darüber hinaus einen elektrisch leitfähigen sowie zylinderförmigen Ring mit einer Durchgangsöffnung zur Aufnahme des Bolzens auf, wobei der aufgenommene Bolzen mit seinem Schaft aus einer Fläche des Rings hervorsteht, welche damit die Kontaktfläche des Rings bildet. Erfindungsgemäß umfasst der Einsatz außerdem eine Schutzkappe mit einem Halteabschnitt mit einem zweiten Verbindungsmittel, welches mit dem ersten Verbindungsmittel des Bolzens verbindbar ist, und einem Flanschabschnitt, der bei verbundener Schutzkappe an der Kontaktfläche des Rings anliegt.

Erfindungsgemäß deckt die Schutzkappe den Schaft und die Kontaktfläche des Rings vollständig ab. Damit werden die relevanten Bereiche des Einsatzes vor einer Beschädigung und/oder ein versehentliches Auftragen von Lack geschützt.

In einer bevorzugten Ausführungsform der Erfindung ist das erste Verbindungsmittel und das zweite Verbindungsmittel derart angeordnet, dass durch die Verbindung des ersten Verbindungsmittels mit dem zweiten Verbindungsmittel der Flanschabschnitt der Schutzkappe gegen die Kontaktfläche des Rings gepresst wird. Der Anpressdruck sorgt für eine dichte Verbindung der Schutzkappe, wodurch verhindert wird, dass Flüssigkeiten, wie beispielsweise Lack oder Farbe, zwischen Schutzkappe und Einsatz hindurchfließen können und so trotz Schutzkappe an die Kontaktfläche oder den Schaft gelangen können.

In einer bevorzugten Ausführungsform der Erfindung ist der Flanschabschnitt im Wesentlichen scheibenförmig ausgebildet und weist eine dem Halteabschnitt zugewandte Oberseite und dem Halteabschnitt abgewandte Unterseite auf, wobei die Unterseite an der Kontaktfläche des Rings anliegt, wenn die Schutzkappe mit dem Bolzen verbunden ist. Da der Halteabschnitt direkt mit dem Schaft verbunden ist und der Flanschabschnitt flach an der Kontaktfläche anliegt, nimmt der durch die Schutzkappe geschützte Einsatz besonders wenig Platz ein. Diese Ausführungsform eignet sich daher besonders für enge Bereiche. Insbesondere kann das zweite Verbindungsmittel in dem Halteabschnitt dabei als Klemmzylinder ausgeführt sein, dessen Innendurchmesser dem Außendurchmesser des Schafts entspricht. Der Halteabschnitt und daher die Schutzkappe werden daher lediglich durch Reibungskräfte mit dem Bolzen verbunden. Da sich der Halteabschnitt im Wesentlichen über die gesamte Länge der Schutzkappe erstreckt, wird die Schutzkappe zuverlässig an dem Schaft gehalten. Die Schutzkappe lässt sich in dieser Ausführungsform besonders schnell mit dem Bolzen verbinden, da diese einfach nur auf diesen aufgesteckt werden muss.

In einer besonders bevorzugten Ausführungsform der Erfindung weist der scheibenförmige Flanschabschnitt einen zusätzlichen Klemmring auf, der von dessen Unterseite hervorsteht. Der Klemmring kann mit seinem Innendurchmesser an den Außendurchmesser des Schafts angepasst sein, um durch Reibungskräfte an diesem gehalten zu werden. Alternativ oder zusätzlich kann der Klemmring mit seinem Außendurchmesser an den Innendurchmesser der Durchgangsöffnung des Rings angepasst sein, um an diesem gehalten zu werden. Der Klemmring stellt daher ein zusätzliches Verbindungsmittel der Schutzkappe dar.

In einer bevorzugten Ausführungsform der Erfindung ist der Flanschabschnitt im Wesentlichen zylinderförmig ausgebildet und liegt mit einer dem Halteabschnitt abgewandten, insbesondere ringförmigen Stirnfläche an der Kontaktfläche des In einer bevorzugten Ausführungsform der Erfindung ist der Flanschabschnitt im Wesentlichen zylinderförmig ausgebildet und liegt mit einer dem Halteabschnitt abgewandten, insbesondere ringförmigen Stirnfläche an der Kontaktfläche des Rings an. Der zylinderförmige Flanschabschnitt lässt sich besonders gut angreifen um die Schutzkappe mit dem Bolzen zu verbinden. Zusätzlich wird die Schutzkappe durch die anliegende Stirnfläche besonders gut an der Kontaktfläche abgedichtet. Das zweite Verbindungsmittel in dem Halteabschnitt kann dabei insbesondere als Innengewinde im Halteabschnitt ausgebildet sein. Da sich der Halteabschnitt und das darin angeordnete Gewinde nicht über die gesamte Länge der Schutzkappe erstreckt, lässt sich diese besonders einfach im Spritzgussverfahren herstellen. Außerdem muss die Schutzkappe nicht über die gesamte Länge mit dem Bolzen verschraubt werden, sondern nur über die Länge des in dem Halteabschnitt angeordneten Gewindes.

In einer besonders bevorzugten Ausführungsform der Erfindung weist die Schutzkappe, an dem Flanschabschnitt, an seiner dem Halteabschnitt abgewandten Stirnfläche, eine Fase an der Innenseite der Schutzkappe auf. Die Fase ist demnach an der Kante zwischen Stirnfläche und Innenseite des zylinderförmigen Flanschabschnitts angeordnet. Durch die Phase wird die Auflagefläche des Flanschabschnitts auf der Kontaktfläche weiter verringert, wodurch bei gleicher durch die Verbindungsmittel ausgeübte Kraft, ein höherer Anpressdruck entsteht. Dieser führt zu einer besonders dichten Verbindung.

Erfindungsgemäß ist an dem Flanschabschnitt ein Abdeckring angeordnet, der eine Mantelfläche des Rings umgreift. Der Abdeckring sichert einerseits die Zentrierung des Flanschabschnitts auf der Kontaktfläche, sodass dieser nicht durch eine externe seitliche Krafteinwirkung verschoben wird, wodurch Teile der Kontaktfläche exponiert werden könnten. Darüber hinaus wird dadurch auch die Mantelfläche des Rings vor Beschädigungen geschützt.

Erfindungsgemäß weist der Ring an seiner Mantelfläche eine Nut auf und der Abdeckring ragt vollständig über die Nut. Die Nut dient dazu, den Ring mit einem Werkzeug greifen zu können, um beispielsweise Reparaturen an dem Einsatz durchzuführen. Wird die Nut beschädigt oder versehentlich mit Lack oder Farbe aufgefüllt, kann ein Werkzeug nicht mehr am Einsatz angreifen. Durch den Abdeckring wird die Nut sowohl vor Beschädigungen als auch vor versehentlichem Auftrag von Lack und/oder Farbe geschützt. Es wird daher sichergestellt, dass der Einsatz mit einem Werkzeug angegriffen werden kann.

In einer bevorzugten Ausführungsform der Erfindung weist der Abdeckring an seiner dem Flanschabschnitt abgewandten Stirnseite eine Fase an seiner Außenseite auf. Die Kante zwischen Stirnfläche und Außenseite des Abdeckrings ist daher angefast. Da die Wand oftmals zur Korrosionsbeständigkeit im Nachhinein lackiert oder beschichtet wird, muss sichergestellt sein, dass dies lückenlos geschehen kann. Durch die Fase an der Außenseite des Abdeckrings wird der Zugang bis an die Kante zwischen Wand und der Mantelfläche des Rings erleichtert.

In einer bevorzugten Ausführungsform der Erfindung weist die Schutzkappe auf ihrer Außenseite am Halteabschnitt und/oder am Flanschabschnitt eine Riffelung auf. Diese dient zur besseren Handhabung der Schutzkappe, sodass diese einfach und sicher mit dem Bolzen verbunden, beispielsweise verschraubt werden kann.

In einer bevorzugten Ausführungsform der Erfindung begrenzt die Schutzkappe mit dem Ring ein dicht abgeschlossenes Volumen, wobei der Schaft des Bolzens und die Kontaktfläche des Rings in dem Volumen angeordnet sind. Die Schutzkappe kann daher beispielsweise bei einem Schlag, leicht nach innen in das Volumen einfedern um die Wucht des Schlages abzufedern, ohne dass Beschädigungen an dem Einsatz auftreten.

In einer bevorzugten Ausführungsform der Erfindung weist die Schutzkappe ein Kunststoff Material auf. Kunststoff bietet durch die leichte Verformbarkeit ein ausgezeichnetes Material zum Schutz des Einsatzes. Darüber hinaus weist es ein geringes Gewicht auf und ist günstig zu fertigen. Weitere Vorteile bietet das Material bei Lackierungen und Beschichtungen mit elektrochemischen Verfahren. Wenn die Schutzkappe elektrisch leitend wäre, würde sie bei solchen Verfahren ebenfalls gleichmäßig beschichtet. Bei Kunststoff wird hingegen im Wesentlichen nur das zu beschichtende Teil lackiert, da der Kunststoff nicht elektrisch leitfähig ist.

Weitere Merkmale, Vorteile und Anwendungsmöglichkeiten der vorliegenden Erfindungen ergeben sich auch aus der nachfolgenden Beschreibung von Ausführungsbeispielen und unter Bezugnahme auf die Zeichnungen.

Es zeigen schematisch:
- Figur 1: Eine Seitenansicht eines montierten Einsatzes ohne Schutzkappe,
- Figur 2: Eine Seitenansicht einer Schutzkappe
- Figur 3: Eine Seitenansicht eines erfindungsgemäßen Einsatzes mit Schutzkappe,
- Figur 4: Eine schräge Draufsicht eines erfindungsgemäßen Einsatzes mit Schutzkappe,
- Figur 5: Eine Schnittansicht eines erfindungsgemäßen Einsatzes mit Schutzkappe,
- Figur 6: Einen vergrößerten Ausschnitt aus der Schnittansicht eines erfindungsgemäßen Einsatzes mit Schutzkappe der Fig. 5,
- Figur 7: Eine Schnittansicht eines alternativen nicht beanspruchten Einsatzes mit Schutzkappe,

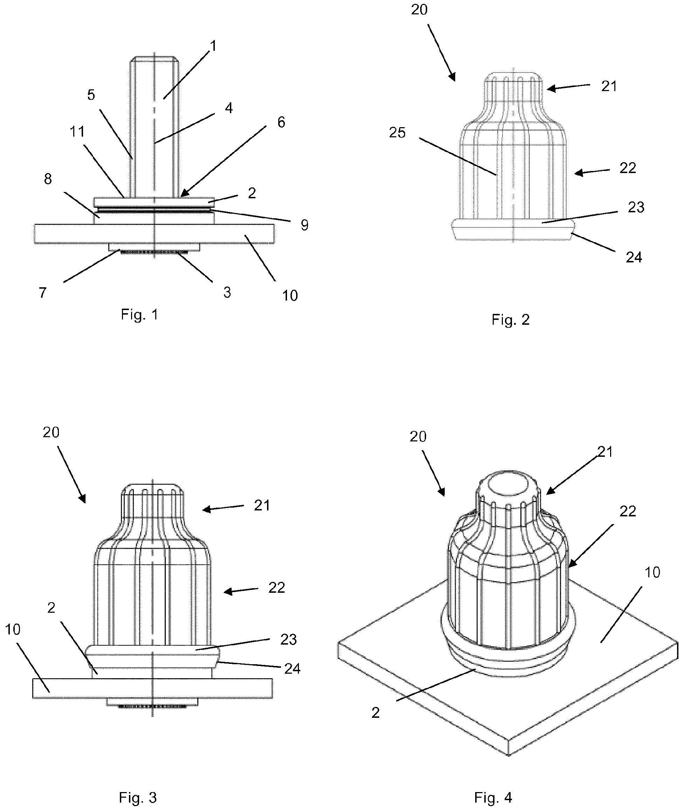

Figur 1 zeigt einen Einsatz mit einem Bolzen 1 der einen Kopf 3 sowie einen Schaft 4 aufweist, der sich entlang einer zentralen Achse erstreckt. An der Außenfläche des Schafts 4 ist ein Außengewinde 5 als Verbindungsmittel vorgesehen, um den Schaft 4 und damit den erfindungsgemäßen Einsatz mit einem elektrischen Leiter, beispielsweise mittels eines Kabelschuhs zu verbinden. Der Kabelschuh wird dann auf eine Kontaktfläche 11 des Rings 2 gepresst, die elektrisch leitfähig ist und so über den Ring 2 eine elektrische Verbindung zu der Wand 10 herstellt. Der Ring 2 ist in einer Öffnung einer Wand 10 eingesetzt und weist eine Durchgangsöffnung 6 auf, in die der Bolzen 1 mit seinem Kopf 3 eingepresst ist. Die Durchgangsöffnung 6 ist dabei ein wenig kleiner gewählt als der Außendurchmesser des Kopfes 3 des Bolzens 1. Dadurch wird der Ring beim Einpressen des Kopfes 3 geweitet und so mit der Wand 10 fest verbunden. Der Ring 2 weist einen Hülsenabschnitt 7 auf, welcher im Wesentlichen zylinderförmig ausgebildet ist und welcher in die Öffnung der Wand 10 eingesetzt ist. Ein weiterer zylinderförmiger Bereich des Rings 2 weist einen größeren Außendurchmesser auf und ist als Absatz 8 ausgebildet, der an einer Außenseite der Wand 10 anliegt. In der Außenkontur des Absatzes 8 ist außerdem eine Nut 9 angeordnet, welche den Ring 2 vollständig umläuft und die zum Angreifen eines Werkzeuges ausgebildet ist. Der Schaft 4 des Einsatzes steht exponiert aus der Wand 10 heraus und ist daher anfällig für Beschädigungen.

Figur 2 zeigt eine Schutzkappe 20 eines erfindungsgemäßen Einsatzes mit einem Halteabschnitt 21 und einem Flanschabschnitt 22. Sowohl der Halteabschnitt 21 als auch der Flanschabschnitt 22 sind im Wesentlichen zylinderförmig ausgebildet und an einem Verbindungsbereich miteinander verbunden. Der Halteabschnitt 21 weist einen kleineren Außendurchmesser auf als der Flanschabschnitt 22, wobei der Verbindungsbereich konkav ausgebildet ist und sich von dem großen Durchmesser des Flanschabschnitts 22 zu dem kleinen Durchmesser des Halteabschnitts 21 verjüngt. An der Innenseite des Halteabschnitts 21 ist ein Innengewinde 26 als zweites Verbindungsmittel angeordnet. An der Unterseite des Flanschabschnitt 22, die dem Halteabschnitt 21 abgewandt angeordnet ist, weist der Flanschabschnitt 22 einen Abdeckring 23 auf. Der Abdeckring 23 ist an der Kante zwischen seiner Unterseite und der Außenseite der Mantelfläche mit einer Fase 24 versehen. Zur Verbindung der Schutzkappe 20 mit dem in der Wand eingesetzten Bolzen 1 und Ring 2 wird die Schutzkappe 20 über den Bolzen 1 positioniert und das Innengewinde 26 der Schutzkappe mit dem Außengewinde 5 des Bolzens 1 verschraubt.

Figur 3 zeigt den kompletten erfindungsgemäßen Einsatz, wobei die Schutzkappe 20 mit dem Bolzen 1 und dem Ring 2 verschraubt ist. Die Kontaktfläche 11 des Rings 2 sowie der Bolzen 1 mit seinem Schaft 4 mit Außengewinde 5 werden vollständig von der Schutzkappe 20 abgedeckt. Der Abdeckring 23 umgreift dabei eine Mantelfläche des Rings 2, wobei die axiale Ausdehnung des Abdeckrings derart gewählt ist, dass auch die Nut 9 in der Mantelfläche des Rings 2 durch den Abdeckring 23 abgedeckt ist.

Die Darstellung des erfindungsgemäßen Einsatzes in der Figur 4 zeigt, dass die Schutzkappe 20 und insbesondere deren Halteabschnitt 21 nach oben hin geschlossen ist und daher durch die Schutzkappe 20 und den Ring 2 ein abgeschlossenes Volumen gebildet wird, in dem die Kontaktfläche 11 des Rings 2 und der Bolzen 1 angeordnet ist, so dass diese von außen nicht mehr zugänglich sind.

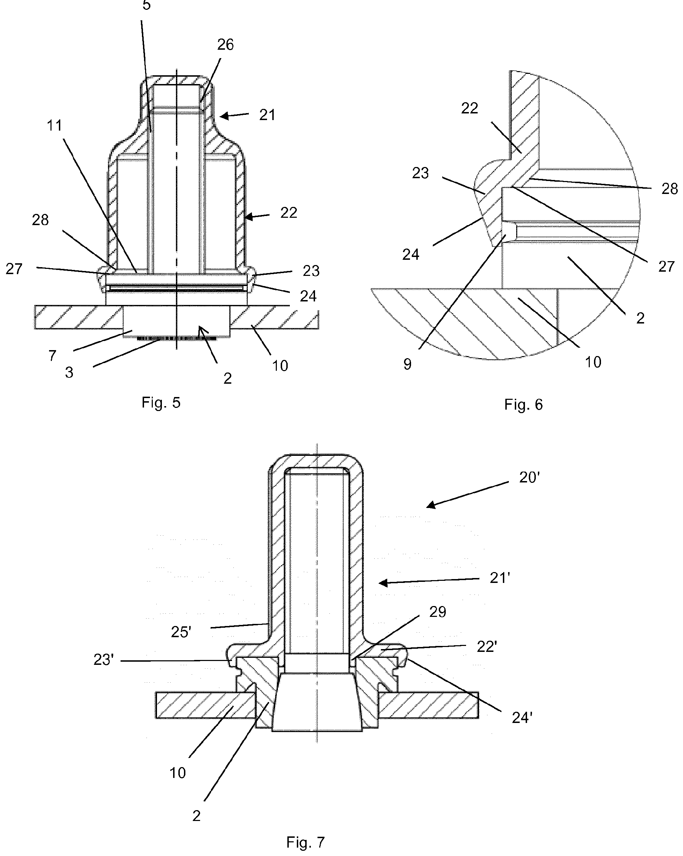

Figur 5 und die vergrößerte Darstellung in Fig. 6 zeigt eine Schnittdarstellung des erfindungsgemäßen Einsatzes. Der Hülsenabschnitt 7 des Rings 2 ist in eine Öffnung der Wand 10 eingesetzt und durch Einpressen des Kopfes 3 in den Hülsenabschnitt 7 des Rings 2 mit diesem und der Wand 10 verpresst. Die Schutzkappe 20 ist mit Ihrem Halteabschnitt 21, mit dem Innengewinde 26 mit dem oberen Ende des Außengewindes 5 des Schaftes 4 verschraubt. Der Halteabschnitt 21 hat eine im Wesentlichen zylindrische Form, die nach oben geschlossen ist und nach unten mit dem Flanschabschnitt 22 verbunden ist. Der Flanschabschnitt 22 setzt mit seiner Stirnfläche 27 auf dem äußeren Rand der Kontaktfläche 11 des Ringes 2 auf. Die Länge der Schutzkappe 20, die Anordnung des Innengewindes 26 und die Länge des Schafts 4 mit dem Außengewinde 5 ist derart gewählt, dass die Stirnfläche 27 bereits auf der Kontaktfläche 11 aufsetzt, wenn die Schutzkappe 20 mit ihrem Innengewinde 26 noch nicht vollständig auf das Außengewinde 5 des Bolzens 1 aufgeschraubt ist. Durch eine weitere Verschraubung wird daher mit der Stirnfläche 27 eine Kraft auf die Kontaktfläche 11 ausgeübt und so die Schutzkappe 20 dicht mit dem Ring 2 verbunden. Da die Stirnfläche 27 an ihrer Kante mit der Innenseite des Flanschabschnitts 22 eine Fase 28 aufweist, ist die Berührungsfläche zwischen der Stirnfläche 27 und der Kontaktfläche 11 verringert, wodurch der Anpressdruck erhöht ist. Die ringförmige Berührungsfläche zwischen der Stirnfläche 27 und der Kontaktfläche 11 hat insbesondere eine Breite, die kleiner ist als die Wandstärke des Flanschabschnitts 22. Dadurch wird sichergestellt, dass die Schutzkappe dicht mit dem Ring verbunden ist. Die Stirnfläche 27 des Flanschabschnitts 22 geht über in den Abdeckring 23, der die Mantelfläche des Rings 2 umgreift und eine Nut 9 in der Mantelfläche abdeckt. An der Kante zwischen Unterseite des Abdeckrings 23 und seiner Außenseite weist der Abdeckring eine Fase 24 auf. Dadurch kann beim Lackieren sichergestellt werden, dass auch die Ecke zwischen Wand 10 und Ring 2 gut zugänglich bleibt und daher lackiert werden kann.

Ein alternatives nicht beanspruchtes Beispiel der Schutzkappe 20' ist in der Figur 7 dargestellt. Diese weist ebenfalls einen Halteabschnitt 21' auf, der sich jedoch im Wesentlichen über die gesamte Länge des Bolzens 1 bis zu der Kontaktfläche 11 erstreckt. Als Flanschabschnitt 22' ist lediglich ein scheibenförmiges Element vorgesehen, welches mit seiner gesamten Unterseite auf die Kontaktfläche 11 des Rings 2 gepresst wird. An der Außenkante des scheibenförmigen Flanschabschnittes ist wiederum ein Abdeckring 23' mit einer Fase 24' angeordnet, der die Mantelfläche des Rings 2 umgreift. An der Unterseite des Flanschabschnitts 22' ist zusätzlich ein Klemmring 29 angeordnet, dessen Innendurchmesser an den Außendurchmesser des Bolzens 1 angepasst ist. Zusätzlich ist der Außendurchmesser des Klemmrings 29 an den Innendurchmesser der Durchgangsöffnung 6 des Rings 2 angepasst. Dadurch wird die Schutzkappe auch an dem Ring 2 gehalten. Als zweites Verbindungselement ist in dem Halteabschnitt 21' der Schutzkappe lediglich ein Klemmzylinder vorgesehen. Dies bedeutet, dass der Innendurchmesser des Halteabschnitts 21' derart gewählt ist, dass dieser an der Außenseite des Bolzens 1 anliegt. Durch die Reibung zwischen dem Gewinde des Bolzens 1 und dem Halteabschnitt wird die Schutzkappe auf dem Bolzen gehalten. Die Schutzkappe kann der auf den Bolzen 1 aufgesteckt werden.

### Bezugszeichenliste

- 1: Bolzen
- 2: Ring
- 3: Kopf
- 4: Schaft
- 5: Außengewinde
- 6: Durchgangsöffnung
- 7: Hülsenabschnitt
- 8: Absatz
- 9: Nut
- 10: Wand
- 11: Kontaktfläche
- 20, 20': Schutzkappe
- 21, 21': Halteabschnitt
- 22, 22': Flanschabschnitt
- 23, 23': Abdeckring
- 24, 24': Fase Abdeckring
- 25, 25': Riffelung
- 26: zweites Verbindungsmittel
- 27: Stirnfläche
- 28: Fase Stirnfläche
- 29: Klemmring

## Patentansprüche

1. Einsatz zur Verbindung eines elektrischen Anschlusses mit einer Wand (10) aufweisend einen Bolzen (1), mit einem Schaft (4) der ein erstes Verbindungsmittel (5) aufweist, und einem elektrisch leitfähigem sowie zylinderförmigen Ring (2) mit einer Durchgangsöffnung (6) zur Aufnahme des Bolzens (1), wobei der aufgenommene Bolzen (1) mit seinem Schaft (4) aus einer Kontaktfläche (11) des Rings (2) hervorsteht, wobei der Einsatz eine Schutzkappe (20, 20') aufweist, wobei die Schutzkappe einen Halteabschnitt (21, 21') mit einem Verbindungsmittel (26) aufweist, welches mit dem ersten Verbindungsmittel (5) des Bolzens (1) verbindbar ist, wobei die Schutzkappe einen Flanschabschnitt (22, 22') aufweist, welcher bei verbundener Schutzkappe (20, 20') an der Kontaktfläche (11) des Rings (2) anliegt, wobei die Schutzkappe (20, 20') den Schaft (4) und die Kontaktfläche (11) des Rings (2) vollständig abdeckt, und wobei an dem Flanschabschnitt (22, 22') ein Abdeckring (23, 23') angeordnet ist, der eine an einer Mantelfläche des Rings (2) vorgesehene Nut (9) zu umgreift, so dass der Abdeckring (23, 23') vollständig über die Nut (9) ragt, **dadurch gekennzeichnet, dass** der elektrisch leitfähige Ring (2) deformierbar ist und einen Hülsenabschnitt (7) aufweist, wobei der Hülsenabschnitt (7) dazu eingerichtet ist in eine Öffnung einer Wand (10) eingesetzt zu werden.

2. Einsatz nach Anspruch 1, **dadurch gekennzeichnet, dass** das erste Verbindungsmittel (5) und das zweite Verbindungsmittel (26) derart angeordnet sind, dass durch die Verbindung des ersten Verbindungsmittels (5) und des zweiten Verbindungsmittels (26) der Flanschabschnitt (22, 22') der Schutzkappe (20, 20') gegen die Kontaktfläche (11) des Rings (2) gepresst wird.

3. Einsatz nach einem der vorhergehenden Ansprüche, **dadurch gekennzeichnet, dass** der Flanschabschnitt (22') im Wesentlichen scheibenförmig ausgebildet ist und mit einer dem Halteabschnitt (21') abgewandten Unterseite an der Kontaktfläche (11) anliegt.

4. Einsatz nach Anspruch 3, **dadurch gekennzeichnet, dass** der scheibenförmige Flanschabschnitt (22') einen zusätzlichen Klemmring (29) aufweist, der von der Unterseite des Flanschabschnitts (22') hervorsteht, wobei der Klemmring insbesondere mit seinem Innendurchmesser an einen Außendurchmesser des Schafts angepasst ist und/oder mit seinem Außendurchmesser an einen Innendurchmesser der Durchgangsöffnung des Rings angepasst ist.

5. Einsatz nach einem der Ansprüche 1 bis 2, **dadurch gekennzeichnet, dass** der Flanschabschnitt (22) im Wesentlichen zylinderförmig ausgebildet ist und mit einer dem Halteabschnitt (21) abgewandten Stirnfläche (27) an der Kontaktfläche (11) des Rings (2) anliegt.

6. Einsatz nach Anspruch 5, **dadurch gekennzeichnet, dass** die Schutzkappe (20), an dem Flanschabschnitt (22), an seiner dem Halteabschnitt (21) abgewandten Stirnfläche (27), eine Fase (28) an der Innenseite der Schutzkappe (20) aufweist.

7. Einsatz nach einem der vorhergehenden Ansprüche, **dadurch gekennzeichnet, dass** der Abdeckring (23, 23') an seiner dem Flanschabschnitt (22, 22') abgewandte Stirnseite eine Fase (24, 24') an seiner Außenseite aufweist.

8. Einsatz nach einem der vorhergehenden Ansprüche, **dadurch gekennzeichnet, dass** die Schutzkappe (20, 20') auf ihrer Außenseite eine Riffelung (25, 25') aufweist.

9. Einsatz nach einem der vorhergehenden Ansprüche, **dadurch gekennzeichnet, dass** die Schutzkappe (20, 20') mit dem Ring (2) ein dicht abgeschlossenes Volumen begrenzt, wobei der Schaft (4) des Bolzens (1) und die Kontaktfläche (11) des Rings (2) innerhalb des Volumens angeordnet sind.

10. Einsatz nach einem der vorhergehenden Ansprüche, **dadurch gekennzeichnet, dass** die Schutzkappe (20, 20') ein Kunststoff-Material aufweist.

## Claims

1. Insert for connecting an electrical connection to a wall (10) comprising a bolt (1) with a shaft (4) comprising a first connecting means (5), and an electrically conductive and cylindrical ring (2) having a through-opening (6) for receiving the bolt (1), wherein the received bolt (1) with its shaft (4) protrudes from a contact surface (11) of the ring (2), wherein the insert comprises a protective cap (20, 20'), wherein the protective cap comprises a retaining portion (21, 21') with a connecting means (26), which can be connected to the first connecting means (5) of the bolt (1), wherein the protective cap comprises a flange portion (22, 22'), which, when the protective cap (20, 20') is connected, abuts the contact surface (11) of the ring (2), wherein the protective cap (20, 20') completely covers the shaft (4) and the contact surface (11) of the ring (2), and wherein on the flange portion (22, 22') a cover ring (23, 23') is arranged, which encompasses a groove (9) provided on a lateral surface of the ring (2), such that the cover ring (23, 23') projects completely over the groove (9), **characterized in that** the electrically conductive ring (2) is deformable and comprises a sleeve portion (7), wherein the sleeve section (7) is adapted to be inserted into an opening of a wall (10).

2. Insert according to claim 1, **characterized in that** the first connecting means (5) and the second connecting means (26) are arranged such that the flange portion (22, 22') of the protective cap (20, 20') is pressed against the contact surface (11) of the ring (2) by the connection of the first connecting means (5) and the second connecting means (26).

3. Insert according to any one of the preceding claims, **characterized in that** the flange portion (22') is substantially disc-shaped and abuts the contact surface (11) with an underside facing away from the retaining portion (21').

4. Insert according to claim 3, **characterized in that** the disc-shaped flange portion (22') comprises an additional clamping ring (29) projecting from the underside of the flange portion (22'), wherein the clamping ring is in particular adapted to an outer diameter of the shaft with its inner diameter and/or is adapted to an inner diameter of the through-opening of the ring with its outer diameter.

5. Insert according to any one of claims 1 to 2, **characterized in that** the flange portion (22) is substantially cylindrical and abuts the contact surface (11) of the ring (2) with an end face (27) facing away from the retaining portion (21).

6. Insert according to claim 5, **characterized in that** the protective cap (20), on the flange portion (22), has a chamfer (28) on the inner side of the protective cap (20) on its end face (27) facing away from the retaining portion (21).

7. Insert according to any one of the preceding claims, **characterized in that** the cover ring (23, 23') has a chamfer (24, 24') on its end face facing away from the flange portion (22, 22').

8. Insert according to any one of the preceding claims, **characterized in that** the protective cap (20, 20') has a ribbing (25,25').

9. Insert according to any one of the preceding claims, **characterized in that** the protective cap (20, 20') together with the ring (2) delimits a sealed volume, wherein the shaft (4) of the bolt (1) and the contact surface (11) of the ring (2) are arranged within the volume.

10. Insert according to any one of the preceding claims, **characterized in that** the protective cap (20, 20') comprises a plastic material.

## Revendications

1. Insert pour connecter une liaison électrique à une paroi (10) comprenant un boulon (1) avec une tige (4) comprenant un premier moyen de connexion (5), et une bague cylindrique et électriquement conductrice (2) ayant une ouverture traversante (6) pour recevoir le boulon (1), dans lequel le boulon reçu (1) avec sa tige (4) fait saillie à partir d'une surface de contact (11) de la bague (2), dans lequel l'insert comprend un capuchon de protection (20, 20'), dans lequel le capuchon de protection comprend une partie de retenue (21, 21') avec un moyen de connexion (26), qui peut être connecté au premier moyen de connexion (5) du boulon (1), dans lequel le capuchon de protection comprend une partie de bride (22, 22'), qui, lorsque le capuchon de protection (20, 20') est connecté, vient en butée contre la surface de contact (11) de la bague (2), dans lequel le capuchon de protection (20, 20') recouvre complètement la tige (4) et la surface de contact (11) de la bague (2), et dans lequel sur la partie de bride (22, 22') une bague de recouvrement (23, 23') est disposée, qui englobe une rainure (9) prévue sur une surface latérale de la bague (2), de sorte que la bague de recouvrement (23, 23') recouvre complètement la rainure (9), **caractérisé en ce que** la bague électriquement conductrice (2) est déformable et comprend une partie de manchon (7), dans lequel la section de manchon (7) est adaptée pour être insérée dans une ouverture d'une paroi (10).

2. Insert selon la revendication 1, **caractérisé en ce que** le premier moyen de connexion (5) et le deuxième moyen de connexion (26) sont agencés de telle sorte que la partie de bride (22, 22') du capuchon de protection (20, 20') est pressée contre la surface de contact (11) de la bague (2) par la connexion du premier moyen de connexion (5) et du deuxième moyen de connexion (26).

3. Insert selon l'une quelconque des revendications précédentes, **caractérisé en ce que** la partie de bride (22') est sensiblement en forme de disque et vient en butée contre la surface de contact (11) avec une face inférieure opposée à la partie de retenue (21').

4. Insert selon la revendication 3, **caractérisé en ce que** la partie de bride en forme de disque (22') comprend une bague de serrage supplémentaire (29) faisant saillie à partir de la face inférieure de la partie de bride (22'), la bague de serrage étant en particulier adaptée à un diamètre extérieur de la tige avec son diamètre intérieur et/ou adaptée à un diamètre intérieur de l'ouverture de passage de la bague avec son diamètre extérieur.

5. Insert selon l'une quelconque des revendications 1 à 2, **caractérisé en ce que** la partie de bride (22) est sensiblement cylindrique et s'applique contre la surface de contact (11) de la bague (2) avec une face frontale (27) opposée à la partie de retenue (21).

6. Insert selon la revendication 5, **caractérisé en ce que** le capuchon de protection (20) présente sur la partie de bride (22) un chanfrein (28) sur la face intérieure du capuchon de protection (20) sur sa face frontale (27) opposée à la partie de retenue (21).

7. Insert selon l'une quelconque des revendications précédentes, **caractérisé en ce que** la bague de recouvrement (23, 23') présente un chanfrein (24, 24') sur sa face frontale opposée à la partie de bride (22, 22').

8. Insert selon l'une quelconque des revendications précédentes, **caractérisé en ce que** le capuchon de protection (20, 20') présente des nervures (25, 25').

9. Insert selon l'une quelconque des revendications précédentes, **caractérisé en ce que** le capuchon de protection (20, 20') délimite avec la bague (2) un volume étanche, la tige (4) du boulon (1) et la surface de contact (11) de la bague (2) étant disposées à l'intérieur du volume.

10. Insert selon l'une quelconque des revendications précédentes, **caractérisé en ce que** le capuchon de protection (20, 20') comprend une matière plastique.
